# FASCICULE DE BREVET EUROPEEN

(11) **EP 0 551 779 B1**
(45) Date de publication et mention de la délivrance du brevet: **21.08.1996**
(21) Numéro de dépôt: 92403504.1
(22) Date de dépôt: 21.12.1992
(51) Int. Cl.: H02B 1/04

(54) **Platine de montage pour appareils électriques à basse tension**
Montageplatine für elektrische Niederspannungsgeräte
Mounting plate for low voltage electrical equipment

(30) Priorité: 16.01.1992 FR 9200522
(43) Date de publication de la demande: 21.07.1993
(73) Titulaire: SCHNEIDER ELECTRIC SA, F-92100 Boulogne-Billancourt (FR)
(72) Inventeur: Milliere, Paul, F-21490 Varois et Chaignot (FR); Verdenne, Serge, F-21120 Marcilly sur Tille (FR)
(74) Mandataire: Carias, Alain

(56) Documents cités:
- FR-A- 2 260 255
- GB-A- 2 064 225

## Description

La présente invention concerne une platine perforée de montage pour appareils électriques à basse tension et leurs organes auxiliaires de montage et/ou de câblage, comprenant une plaque plane munie d'évidements disposés régulièrement en rangées et séparés entre eux par des barrettes d'entretoisement.

Les appareils électriques à basse tension peuvent se monter soit sur des telles platines perforées, soit sur des profilés ou rails normalisés. Une telle platine perforée est connue d'après le brevet FR-2 260 255 auquel on peut se reporter pour une meilleure compréhension. Il apparaît que, lorsqu'on désire fixer à un organe de châssis commun une telle platine et un profilé normalisé, le montage de certains appareils dont la longueur nécessite une fixation à la fois sur la platine et sur le profilé requiert l'apport de cales en raison de la différence de profondeur constatée entre les plans de fixation de la platine et respectivement du profilé. Ces cales entraînent une complication de stockage et de montage.

La présente invention a pour but d'éviter cet inconvénient au moyen de dispositions simples prévues pour la platine.

Selon l'invention, la platine du type décrit est munie d'oreilles de fixation à un châssis, ces oreilles étant ménagées par retrait localisé de parties de la plaque, et le retrait de la zone de fixation des oreilles est équivalent à la profondeur normalisée d'un profilé distinct susceptible d'être fixé au châssis, pour définir un plan de montage commun.

Les caractéristiques et avantages de l'invention vont apparaître grâce à la description faite ci-après d'un mode de réalisation de l'invention, en regard des figures suivantes.

La figure 1 représente de face une platine perforée de montage selon l'invention destinée au montage d'appareils électriques à basse tension.

Les figures 2 et 3 en sont respectivement une vue de côté et une vue de dessus.

La figure 4 est une vue de côté d'un châssis d'armoire auquel sont fixés une platine selon l'invention et un profilé chapeau normalisé.

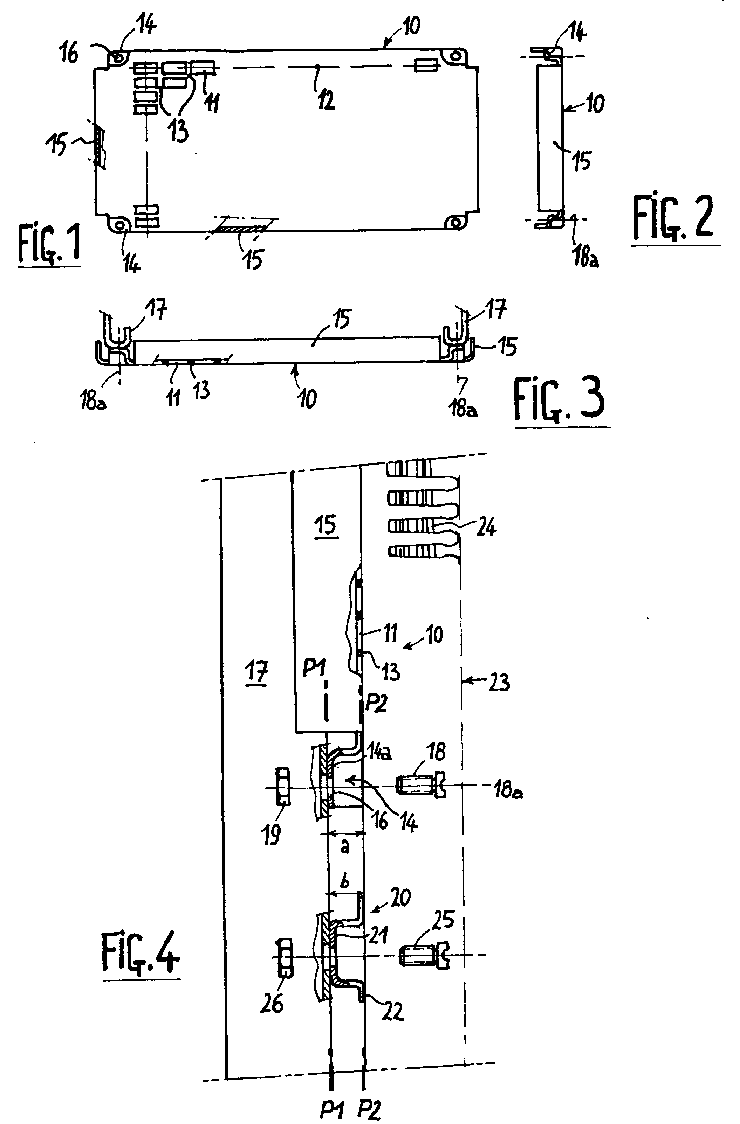

La platine perforée 10 illustrée sur la figure 1 est constituée par une plaque métallique munie d'évidements 11 disposés régulièrement en rangées 12 pour permettre l'accrochage et la fixation d'appareils électriques à basse tension. Les évidements 11 ont une forme générale rectangulaire et sont séparés par des barrettes 13 d'entretoisement, de manière à autoriser de façon connue l'accrochage d'appareils et d'organes auxiliaires. La platine 10 présente des oreilles 14 de fixation prévues aux coins et des ailes 15 pliées à angle droit par rapport au plan de la plaque. Les oreilles 14 pourraient bien entendu être prévues en d'autres endroits de la platine. Chaque oreille 14 possède un orifice 16 de fixation à un châssis vertical 17, tel qu'un montant, une paroi ou un autre organe porteur ; la fixation s'effectue par tous moyens connus, par exemple par des vis 18 coopérant avec des écrous 19 et susceptibles d'être montées selon des axes 18a.

Selon l'invention, le retrait a de la zone 14a de l'oreille 14 qui comporte l'orifice 16 est équivalent ou égal à la profondeur normalisée b d'un profilé de montage 20 susceptible d'être fixé au châssis. Un tel profilé 20 est fixé au châssis 17 par son âme 21 au moyen de vis 25 et d'écrous 26 et reçoit sur ses ailes 22 les appareils à basse tension ou leurs auxiliaires de montage ou de câblage. Le profilé 20 peut être un profilé chapeau de profondeur normalisée telle que définie par les normes européennes EN 50 022, 50 023 ou un profilé d'un autre type - par exemple du type dit combiné - ayant la même profondeur (7,5, 15 ou 25 mm) que les profilés normalisés.

Les distances a et b sont illustrées sur la figure 4 entre le plan vertical avant P1 du châssis 17 et le plan vertical avant P2 de la platine 10 et du profilé 20. On peut ainsi appliquer ou fixer, par cette réalisation simple d'un plan de montage commun P2, des auxiliaires de montage et/ou de câblage à la fois sur la platine et sur le profilé ; il peut s'agir par exemple d'une goulotte 23 dans laquelle sont logés des câbles 24, ou d'un socle ou appareil nécessitant une prise d'appui à la fois sur la platine et sur le profilé. La continuité de fixation ainsi assurée évite de recourir à des cales ou autres moyens usuels de rattrapage de profondeur. On constate de plus qu'il est avantageux de pouvoir loger les têtes des vis 18 dans les retraits des zones de fixation sans que ces têtes ne gênent le montage d'appareils, dès lors qu'elles ne dépassent pas en position de fixation du plan commun de montage P2.

## Revendications

1. Platine de montage pour appareils électriques à basse tension et leurs organes auxiliaires de montage et/ou de câblage, comprenant une plaque munie d'évidements (11) disposés régulièrement et séparés entre eux par des barrettes d'entretoisement (13),
caractérisé par le fait qu'elle est munie d'oreilles de fixation (14) ménagées par retrait localisé de parties de la plaque pour permettre la fixation à un châssis (17), et que le retrait (a) de la zone de fixation (14a) des oreilles (14) est équivalent à la profondeur normalisée (b) d'un profilé (20) distinct de la platine et susceptible d'être fixé au châssis (17), pour définir un plan de montage commun (P2).

## Patentansprüche

1. Montageplatine für elektrische Niederspannungsgeräte sowie deren Zusatzteile für Montage und Verdrahtung, bestehend aus einer flachen Platte mit gleichmäßig in Reihen angeordneten und untereinander durch Stege (13) getrennte Aussparungen (11), **dadurch gekennzeichnet, daß** sie Befestigungslaschen (14) besitzt, die lokal versetzt an der Platine ausgebildet sind, um sie an einem Rahmen (17) zu befestigen, und daß der Versatz (a) in der Befestigungszone (14a) der Befestigungslaschen (14) der genormten Tiefe (b) eines bestimmten Profils (20) entspricht, das auf dern Rahmen (17) befestigt werden kann, um so einen einheitliche Montagefläche (P2) zu bilden.

## Claims

1. Mounting plate for low-voltage electrical equipment and auxiliary mounting and/or wiring units, comprising a plate having openings (11) disposed regularly and separated from each other by spacing strips (13),
characterised in that it is provided with fixing lugs (14) formed by localised offsetting of parts of the plate to enable fixing to a frame (17), and in that the offset (a) of the fixing area (14a) of the lugs (14) is equivalent to the standard depth (b) of a rail (20) separate from the plate and adapted to be fixed to the frame (17), in order to define a common mounting plane (P2).
